# FASCICULE DE BREVET EUROPEEN

(11) **EP 3 478 515 B1**
(45) Date de publication et mention de la délivrance du brevet: **21.10.2020**
(21) Numéro de dépôt: 17740449.8
(22) Date de dépôt: 29.06.2017
(51) Int. Cl.: B60C 1/00, C08L 9/06

(54) **PNEUMATIQUE COMPRENANT UNE COMPOSITION COMPRENANT UN SYSTÈME SPÉCIFIQUE D'ÉLASTOMÈRES**
REIFEN MIT EINER ZUSAMMENSETZUNG MIT EINEM SPEZIFISCHEN ELASTOMERSYSTEM
TIRE COMPRISING A COMPOSITION CONTAINING A SPECIFIC ELASTOMER SYSTEM

(30) Priorité: 30.06.2016 FR 1656221
(43) Date de publication de la demande: 08.05.2019
(73) Titulaire: Compagnie Générale des Etablissements Michelin, 63000 Clermont-Ferrand (FR)
(72) Inventeur: VOISIN, Floriandre, 63040 Clermont-Ferrand Cedex 9 (FR); NOURRY, Christine, 63040 Clermont-Ferrand Cedex 9 (FR)
(74) Mandataire: Wroblewski, Nicolas Paul André
(86) Numéro de dépôt international: PCT/FR2017/051748
(87) Numéro de publication internationale: WO 2018/002537

(56) Documents cités:
- FR-A1- 2 974 808

## Description

L'invention est relative aux pneumatiques et à leurs compositions, notamment en bande de roulement, et plus particulièrement aux pneumatiques comprenant une composition spécifique pour améliorer le collant de la composition avant cuisson.

La capacité des compositions de caoutchouc d'être collantes avant cuisson est une propriété indispensable à la confection de pneumatique. En effet, pour confectionner les pneumatiques, il est nécessaire de pouvoir appliquer les différentes couches du pneumatique les unes sur les autres et que ces couches adhèrent les unes aux autres, avant la cuisson du pneumatique, cuisson qui associera par la réticulation les couches les unes aux autres. Cette propriété de collant de la composition avant cuisson, est également appelée « collant à cru » ou « tack » ou « green tack ».

Les développements récents de pneumatiques à faible résistance au roulement ont amené les industriels des pneumatiques à modifier substantiellement les compositions de caoutchouc de leurs pneumatiques. Ce développement de mélanges à basse résistance au roulement s'accompagne en général d'une diminution du collant à cru. En effet, les résines tackifiantes utilisées pour augmenter le collant à cru s'accompagnent en général d'une augmentation de l'hystérèse. L'autre solution d'augmentation du collant à cru, par solvant d'avivage, présente le défaut de libérer des composés organiques volatils.

A présent, la Demanderesses a montré qu'une composition particulière en pneumatique, comprenant une combinaison spécifique d'élastomères, de charge et de plastifiants permet d'avoir un excellent compromis de performances entre le collant à cru, la résistance au roulement, l'adhérence et l'usure.

L'invention concerne donc un pneumatique comprenant une composition de caoutchouc à base d'au moins, 10 à 25 pce de polyisoprène, 30 à 40 pce de polybutadiène, 45 à 60 pce de copolymère styrène butadiène dont le taux de styrène est inférieur à **30%** en poids, 90 à 150 pce de charge renforçante inorganique, 1 à 10 pce de noir de carbone, 50 à 100 pce d'un système plastifiant comprenant de 25 à 50 pce d'huile plastifiante et 25 à 50 pce de résine hydrocarbonée ; composition dans laquelle les quantités de charge et de plastifiant sont telles que le rapport de la quantité de charge en pce sur la quantité de plastifiant en pce est comprise entre 0,8 et 2,2.

### I- Constituants de la composition

Les compositions de caoutchouc selon l'invention sont à base d'au moins, 10 à 25 pce de polyisoprène, 30 à 40 pce de polybutadiène, 45 à 60 pce de copolymère styrène butadiène dont le taux de styrène est inférieur à **30%** en poids, 90 à 150 pce de charge renforçante inorganique, 1 à 10 pce de noir de carbone, 50 à 100 pce d'un système plastifiant comprenant de 25 à 50 pce d'huile plastifiante et 25 à 50 pce de résine hydrocarbonée ; composition dans laquelle les quantités de charge et de plastifiant sont telles que le rapport de la quantité de charge en pce sur la quantité de plastifiant en pce est comprise entre 0,8 et 2,2.

Par l'expression «composition à base de» il faut entendre une composition comportant le mélange et/ou le produit de réaction in situ des différents constituants de base utilisés, certains de ces constituants pouvant réagir et/ou étant destinés à réagir entre eux, au moins partiellement, lors des différentes phases de fabrication de la composition, ou lors de la cuisson ultérieure, modifiant la composition telle qu'elle est préparée au départ. Ainsi les compositions telles que mises en oeuvre pour l'invention peuvent être différentes à l'état non réticulé et à l'état réticulé.

Dans la présente description, sauf indication expresse différente, tous les pourcentages (%) indiqués sont des pourcentages en masse. D'autre part, tout intervalle de valeurs désigné par l'expression "entre a et b" représente le domaine de valeurs allant de plus de a à moins de b (c'est-à-dire bornes a et b exclues) tandis que tout intervalle de valeurs désigné par l'expression "de a à b" signifie le domaine de valeurs allant de a jusqu'à b (c'est-à-dire incluant les bornes strictes a et b).

Dans la présente description et sauf indication expresse différente, les valeurs de température de transition vitreuse (Tg) des composés est la valeur telle que mesurée selon ASTM D3418.

### 1-1 Elastomère diénique

Les compositions de l'invention comprennent un mélange spécifique de plusieurs élastomères diéniques.

Par élastomère (ou « caoutchouc », les deux termes étant considérés comme synonymes) du type "diénique", on rappelle ici que doit être compris de manière connue un (on entend un ou plusieurs) élastomère issu au moins en partie (i.e., un homopolymère ou un copolymère) de monomères diènes (monomères porteurs de deux doubles liaisons carbone-carbone, conjuguées ou non).

Les élastomères diéniques peuvent être classés dans deux catégories : "essentiellement insaturés" ou "essentiellement saturés". On entend en général par "essentiellement insaturé", un élastomère diénique issu au moins en partie de monomères diènes conjugués, ayant un taux de motifs ou unités d'origine diénique (diènes conjugués) qui est supérieur à 15% (% en moles); c'est ainsi que des élastomères diéniques tels que les caoutchoucs butyle ou les copolymères de diènes et d'alpha-oléfines type EPDM n'entrent pas dans la définition précédente et peuvent être notamment qualifiés d'élastomères diéniques "essentiellement saturés" (taux de motifs d'origine diénique faible ou très faible, toujours inférieur à 15%). Dans la catégorie des élastomères diéniques "essentiellement insaturés", on entend en particulier par élastomère diénique "fortement insaturé" un élastomère diénique ayant un taux de motifs d'origine diénique (diènes conjugués) qui est supérieur à 50%.

Ces définitions étant données, la composition de caoutchouc de l'invention comprend à titre d'élastomères, au moins 10 à 25 pce de polyisoprène, 30 à 40 pce de polybutadiène et 45 à 60 pce de copolymère styrène butadiène dont le taux de styrène est inférieur à **30%** en poids.

Bien évidemment, chacun des élastomères polyisoprène, polybutadiène ou copolymère styrène butadiène peut être un mélange de plusieurs polyisoprènes, polybutadiènes ou copolymères styrène butadiène respectivement.

De manière préférentielle, le taux total des élastomères polyisoprène, polybutadiène et copolymère styrène butadiène est de 100 pce, c'est-à-dire que la composition ne comprend pas d'autre élastomère que ceux précédemment cités.

Le copolymère styrène butadiène comprend préférentiellement entre 99% et 60% en poids d'unités butadiéniques et entre 1% et 40% d'unités styréniques.

De préférence également, le copolymère styrène butadiène présente un taux de styrène inférieur à 20% en poids.

Plus préférentiellement, ledit copolymère styrène butadiène présente un taux de styrène compris dans un domaine allant de 1% à 20%, de préférence de 2 à 17% en poids.

Les élastomères butadiène et copolymère styrène butadiène peuvent avoir toute microstructure qui est fonction des conditions de polymérisation utilisées, notamment de la présence ou non d'un agent modifiant et/ou randomisant et des quantités d'agent modifiant et/ou randomisant employées. Les élastomères peuvent être statistiques, ou microséquencés, et être préparés en dispersion ou en solution ; ils peuvent être couplés et/ou étoilés ou encore fonctionnalisés avec un agent de couplage et/ou d'étoilage ou de fonctionnalisation. Par fonction on entend ici préférentiellement un groupement chimique interactif avec la charge renforçante de la composition.

A titre de polyisoprène, on utilise préférentiellement du caoutchouc naturel, tout type de caoutchouc naturel est utilisable, et peut éventuellement être modifié ou fonctionnalisé.

### I-2 Charge renforçante

La composition selon l'invention comprend 90 à 150 pce de charge renforçante inorganique et 1 à 10 pce de noir de carbone.

Comme noirs de carbone conviennent tous les noirs de carbone, notamment les noirs dits de grade pneumatique. Parmi ces derniers, on citera plus particulièrement les noirs de carbone renforçants des séries 100, 200 ou 300 (grades ASTM), comme par exemple les noirs N115, N134, N234, N326, N330, N339, N347, N375, ou encore, selon les applications visées, les noirs de séries plus élevées (par exemple N660, N683, N772). Les noirs de carbone pourraient être par exemple déjà incorporés à un élastomère isoprénique sous la forme d'un masterbatch (voir par exemple demandes WO 97/36724 ou WO 99/16600).

On peut utiliser tout type de charge inorganique renforçante connue pour ses capacités à renforcer une composition de caoutchouc utilisable pour la fabrication de pneumatiques, par exemple de la silice, de l'alumine, ou encore un coupage de ces deux types de charge. Pour les besoins de l'invention, la charge inorganique renforçante est préférentiellement de la silice.

La composition peut contenir un type de silice ou un coupage de plusieurs silices. La silice utilisée peut être toute silice renforçante connue de l'homme du métier, notamment toute silice précipitée ou pyrogénée présentant une surface BET ainsi qu'une surface spécifique CTAB toutes deux inférieures à 450 m²/g, de préférence de 30 à 400 m²/g.

La surface spécifique ("aire massique") BET est déterminée par adsorption de gaz à l'aide de la méthode de Brunauer-Emmett-Teller décrite dans "The Journal of the American Chemical Society" Vol. 60, page 309, février 1938, plus précisément selon la norme française NF ISO 9277 de décembre 1996 [méthode volumétrique multipoints (5 points) - gaz: azote - dégazage : 1 heure à 160°C - domaine de pression relative p/po : 0.05 à 0.17]. La surface spécifique CTAB est la surface externe déterminée selon la norme française NF T 45-007 de novembre 1987 (méthode B).

La silice est de préférence une silice de surface spécifique élevée, également couramment appelée silice précipitée hautement dispersible (notée "HDS"), présentant une surface spécifique BET comprise entre 130 et 400 m²/g, préférentiellement comprise entre 140 et 300 m²/g, plus préférentiellement comprise entre 150 et 250 m²/g. A titres de silices HDS, on citera par exemple les silices « Ultrasil 7000 » et « Ultrasil 7005 » de la société Degussa, les silices « Zeosil » 1165MP, 1135MP et 1115MP de la société Rhodia, la silice « Hi-Sil EZ150G » de la société PPG, les silices « Zeopol » 8715, 8745 et 8755 de la Société Huber, des silices précipitées traitées telles que par exemple les silices "dopées" à l'aluminium décrites dans la demande EP-A-0735088 ou les silices à haute surface spécifique telles que décrites dans la demande WO 03/16837.

L'état physique sous lequel se présente la charge renforçante est indifférent, que ce soit sous forme de poudre, de microperles, de granulés, de billes ou toute autre forme densifiée appropriée.

Pour les besoins de l'invention, le taux de noir est compris dans un domaine allant de 1 à 10 pce, de préférence de 2 à 8 pce, et le taux de silice est compris dans un domaine allant de 90 à 150 pce, préférentiellement de 100 à 140 pce, plus préférentiellement de 110 à 140 pce. En dessous de 90 pce de silice, la composition pourrait ne pas être suffisamment renforcée tandis qu'au-dessus de 150 pce de charge, la composition pourrait être moins performante en résistance au roulement.

Ces compositions peuvent optionnellement et préférentiellement également contenir, en complément des agents de couplage, des activateurs de couplage, des agents de recouvrement des charges inorganiques ou plus généralement des agents d'aide à la mise en oeuvre susceptibles de manière connue, grâce à une amélioration de la dispersion de la charge dans la matrice de caoutchouc et à un abaissement de la viscosité des compositions, d'améliorer leur faculté de mise en oeuvre à l'état cru, ces agents étant par exemple des silanes hydrolysables tels que des alkylalkoxysilanes, des polyols, des acides gras, des polyéthers, des amines primaires, secondaires ou tertiaires, des polyorganosiloxanes hydroxylés ou hydrolysables.

On utilise notamment des silanes polysulfurés, dits "symétriques" ou "asymétriques" selon leur structure particulière, tels que décrits par exemple dans les demandes WO03/002648 (ou US 2005/016651) et WO03/002649 (ou US 2005/016650).

Conviennent en particulier, sans que la définition ci-après soit limitative, des silanes polysulfurés dits "symétriques" répondant à la formule générale (III) suivante: (III) Z - A - Sx - A - Z , dans laquelle:
- x est un entier de 2 à 8 (de préférence de 2 à 5) ;
- A est un radical hydrocarboné divalent (de préférence des groupements alkylène en C1-C18 ou des groupements arylène en C6-C12, plus particulièrement des alkylènes en C1-C10, notamment en C1-C4, en particulier le propylène) ;
- Z répond à l'une des formules ci-après: 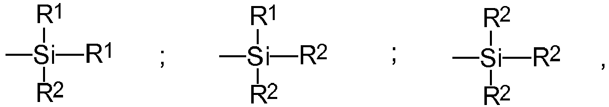 dans lesquelles:
   - les radicaux R1, substitués ou non substitués, identiques ou différents entre eux, représentent un groupe alkyle en C1-C18, cycloalkyle en C5-C18 ou aryle en C6-C18 (de préférence des groupes alkyle en C1-C6, cyclohexyle ou phényle, notamment des groupes alkyle en C1-C4, plus particulièrement le méthyle et/ou l'éthyle).
   - les radicaux R2, substitués ou non substitués, identiques ou différents entre eux, représentent un groupe alkoxyle en C1-C18 ou cycloalkoxyle en C5-C18 (de préférence un groupe choisi parmi alkoxyles en C1-C8 et cycloalkoxyles en C5-C8, plus préférentiellement encore un groupe choisi parmi alkoxyles en C1-C4, en particulier méthoxyle et éthoxyle).

Dans le cas d'un mélange d'alkoxysilanes polysulfurés répondant à la formule (III) ci-dessus, notamment des mélanges usuels disponibles commercialement, la valeur moyenne des "x" est un nombre fractionnaire de préférence compris entre 2 et 5, plus préférentiellement proche de 4. Mais l'invention peut être aussi avantageusement mise en œuvre par exemple avec des alkoxysilanes disulfurés (x = 2).

A titre d'exemples de silanes polysulfurés, on citera plus particulièrement les polysulfures (notamment disulfures, trisulfures ou tétrasulfures) de bis-(alkoxyl(C1-C4)-alkyl(C1-C4)silyl-alkyl(C1-C4)), comme par exemple les polysulfures de bis(3-triméthoxysilylpropyl) ou de bis(3-triéthoxysilylpropyl). Parmi ces composés, on utilise en particulier le tétrasulfure de bis(3-triéthoxysilylpropyl), en abrégé TESPT, de formule [(C2H5O)3Si(CH2)3S2]2 ou le disulfure de bis-(triéthoxysilylpropyle), en abrégé TESPD, de formule [(C2H5O)3Si(CH2)3S]2. On citera également à titre d'exemples préférentiels les polysulfures (notamment disulfures, trisulfures ou tétrasulfures) de bis-(monoalkoxyl(C1-C4)-dialkyl(C1-C4)silylpropyl), plus particulièrement le tétrasulfure de bis-monoéthoxydiméthylsilylpropyl tel que décrit dans la demande de brevet WO 02/083782 (ou US 2004/132880).

A titre d'agent de couplage autre qu'alkoxysilane polysulfuré, on citera également les POS (polyorganosiloxanes) bifonctionnels ou encore des polysulfures d'hydroxysilane (R2 = OH dans la formule III ci-dessus) tels que décrits dans les demandes de brevet WO 02/30939 (ou US 6,774,255) et WO 02/31041 (ou US 2004/051210), ou encore des silanes ou POS porteurs de groupements fonctionnels azo-dicarbonyle, tels que décrits par exemple dans les demandes de brevet WO 2006/125532, WO 2006/125533, WO 2006/125534.

Dans les compositions de caoutchouc conformes à l'invention, la teneur en agent de couplage est préférentiellement comprise entre 5 et 15 pce, plus préférentiellement entre 7 et 12 pce.

### I-3 Système de réticulation

Dans la composition de l'invention, on peut utiliser tout type de système de réticulation connu de l'homme du métier pour les compositions de caoutchouc.

De préférence, le système de réticulation est un système de vulcanisation, c'est-à-dire à base de soufre (ou d'un agent donneur de soufre) et d'un accélérateur primaire de vulcanisation. A ce système de vulcanisation de base peuvent venir s'ajouter, incorporés au cours de la première phase non-productive et/ou au cours de la phase productive telles que décrites ultérieurement, divers accélérateurs secondaires ou activateurs de vulcanisation connus tels qu'oxyde de zinc, acide stéarique ou composés équivalents, dérivés guanidiques (en particulier diphénylguanidine).

Le soufre est utilisé à un taux préférentiel compris entre 0,5 et 10 pce, plus préférentiellement compris entre 0,5 et 5 pce, en particulier entre 0,5 et 3 pce.

Le système de vulcanisation de la composition selon l'invention peut également comprendre un ou plusieurs accélérateurs additionnels, par exemple les composés de la famille des thiurames, les dérivés dithiocarbamates de zinc, les sulfénamides, les guanidines ou les thiophosphates. On peut utiliser en particulier tout composé susceptible d'agir comme accélérateur de vulcanisation des élastomères diéniques en présence de soufre, notamment des accélérateurs du type thiazoles ainsi que leurs dérivés, des accélérateurs de type thiurames, dithiocarbamates de zinc. Ces accélérateurs sont plus préférentiellement choisis dans le groupe constitué par le disulfure de 2-mercaptobenzothiazyle (en abrégé "MBTS"), N-cyclohexyl-2-benzothiazyle sulfénamide (en abrégé "CBS"), N,N-dicyclohexyl-2-benzothiazyle sulfénamide (en abrégé "DCBS"), N-tert-butyl-2-benzothiazyle sulfénamide (en abrégé "TBBS"), N-tert-butyl-2-benzothiazyle sulfénimide (en abrégé "TBSI"), dibenzyldithiocarbamate de zinc (en abrégé "ZBEC") et les mélanges de ces composés. De préférence, on utilise un accélérateur primaire du type sulfénamide.

### I-4 Combinaison de plastifiants

La composition selon l'invention comporte en outre une combinaison de plastifiants ou système plastifiant. Ce système plastifiant représente 50 à 100 pce dans la composition et comprend de 25 à 50 pce d'huile plastifiante et 25 à 50 pce de résine hydrocarbonée. De préférence, le taux total de plastifiant est compris dans un domaine allant de 50 à 90 pce, plus préférentiellement de 55 à 80 pce, mieux, de 60 à 70 pce. En dessous de 50 pce de plastifiant, la composition pourrait être moins performante quant à la processabilité industrielle.

### 1-4-1 Huile plastifiante

Le premier plastifiant de la combinaison de plastifiant de la composition de l'invention est une huile d'extension (ou huile plastifiante) liquide à 20 °C, dit à « basse Tg », c'est-à-dire qui par définition présente une Tg inférieure à -20 °C, de préférence inférieure à -40 °C.

Toute huile d'extension, qu'elle soit de nature aromatique ou non-aromatique connue pour ses propriétés plastifiantes vis-à-vis d'élastomères diéniques, est utilisable. A température ambiante (20°C), ces huiles, plus ou moins visqueuses, sont des liquides (c'est-à-dire, pour rappel, des substances ayant la capacité de prendre à terme la forme de leur contenant), par opposition notamment à des résines plastifiantes hydrocarbonées qui sont par nature solides à température ambiante.

Conviennent particulièrement les huiles choisies dans le groupe constitué par les huiles naphténiques (à basse ou haute viscosité, notamment hydrogénées ou non), les huiles paraffiniques, les huiles MES (Médium Extracted Solvates), les huiles TDAE (Treated Distillate Aromatic Extracts), les huiles minérales, les huiles végétales, les plastifiants éthers, les plastifiants esters, les plastifiants phosphates, les plastifiants sulfonates et les mélanges de ces composés.

Parmi les plastifiants phosphates, on peut citer ceux qui contiennent entre 12 et 30 atomes de carbone, par exemple le trioctyle phosphate.

A titre d'exemples de plastifiants esters non aqueux et non hydrosolubles, on peut citer notamment les composés choisis dans le groupe constitué par les trimellitates, les pyromellitates, les phtalates, les 1,2-cyclohexane dicarboxylates, les adipates, les azélaates, les sébacates, les triesters de glycérol et les mélanges de ces composés. Parmi les triesters ci-dessus, on peut citer notamment des triesters de glycérol, de préférence constitués majoritairement (pour plus de 50 %, plus préférentiellement pour plus de 80 % en poids) d'un acide gras insaturé en C18, c'est-à-dire choisi dans le groupe constitué par l'acide oléique, l'acide linoléique, l'acide linolénique et les mélanges de ces acides. Plus préférentiellement, qu'il soit d'origine synthétique ou naturelle (cas par exemple d'huiles végétales de tournesol ou de colza), l'acide gras utilisé est constitué pour plus de 50% en poids, plus préférentiellement encore pour plus de 80% en poids d'acide oléique. De tels triesters (trioléates) à fort taux d'acide oléique sont bien connus, ils ont été décrits par exemple dans la demande WO 02/088238, à titre d'agents plastifiants dans des bandes de roulement pour pneumatiques.

Pour les besoins de l'invention on utilise préférentiellement à titre d'huile plastifiante une huile choisie dans le groupe constitué par les huiles végétales dont l'indice d'iode en g/100g est compris entre 90 et 140. De manière préférentielle, on utilise une huile végétale choisie dans le groupe constitué par l'huile de tournesol, l'huile de colza et de lin et leurs mélanges. De manière très préférentielle, on utilise l'huile de tournesol.

Préférentiellement, le taux d'huile plastifiante est compris dans un domaine allant de 25 à 45 pce, plus préférentiellement de 27 à 40 pce, encore plus préférentiellement de 30 à 35 pce. En dessous de 25 pce d'huile ou au-dessus de 50 pce d'huile, la composition pourrait être moins performante en adhérence sur sol mouillé, de par une Tg du mélange trop haute ou trop basse.

### 1-4-2 Résine plastifiante

La combinaison de plastifiant comprend également une résine hydrocarbonée, également parfois appelée résine thermoplastique ou résine plastifiante.

De manière connue et par définition une résine est un solide à température ambiante (23°C), par opposition à un composé plastifiant liquide tel qu'une huile. La résine thermoplastique de l'invention présente de préférence une Tg est supérieure à 20°C.

De préférence, la résine plastifiante hydrocarbonée présente au moins une quelconque des caractéristiques suivantes :
- une Tg supérieure à 30°C ;
- une masse moléculaire moyenne en nombre (Mn) comprise entre 400 et 2000 g/mol, plus préférentiellement entre 500 et 1500 g/mol ;
- un indice de polymolécularité (Ip) inférieur à 3, plus préférentiellement inférieur à 2 (rappel : Ip = Mw/Mn avec Mw masse moléculaire moyenne en poids).

Plus préférentiellement, cette résine hydrocarbonée présente l'ensemble des caractéristiques préférentielles ci-dessus.

La macrostructure (Mw, Mn et Ip) de la résine hydrocarbonée est déterminée par chromatographie d'exclusion stérique (SEC) : solvant tétrahydrofurane ; température 35°C ; concentration 1 g/l ; débit 1 ml/min ; solution filtrée sur filtre de porosité 0,45 µm avant injection ; étalonnage de Moore avec des étalons de polystyrène ; jeu de 3 colonnes "WATERS" en série ("STYRAGEL" HR4E, HR1 et HR0.5) ; détection par réfractomètre différentiel ("WATERS 2410") et son logiciel d'exploitation associé ("WATERS EMPOWER").

Les résines hydrocarbonées thermoplastiques peuvent être aliphatiques, ou aromatiques ou encore du type aliphatique/ aromatique c'est-à-dire à base de monomères aliphatiques et/ou aromatiques. Elles peuvent être naturelles ou synthétiques, à base ou non de pétrole (si tel est le cas, connues aussi sous le nom de résines de pétrole).

A titre de monomères aromatiques conviennent par exemple le styrène, l'alpha-méthylstyrène, l'ortho-, méta-, para-méthylstyrène, le vinyle-toluène, le para-tertiobutylstyrène, les méthoxystyrènes, les chlorostyrènes, le vinylmésitylène, le divinylbenzène, le vinylnaphtalène, tout monomère vinylaromatique issu d'une coupe C9 (ou plus généralement d'une coupe C8 à C10). De préférence, le monomère vinylaromatique est du styrène ou un monomère vinylaromatique issu d'une coupe C9 (ou plus généralement d'une coupe C8 à C10). De préférence, le monomère vinylaromatique est le monomère minoritaire, exprimé en fraction molaire, dans le copolymère considéré.

Selon un mode de réalisation particulièrement préférentiel, la résine plastifiante hydrocarbonée est choisie dans le groupe constitué par les résines d'homopolymères ou copolymères de cyclopentadiène (en abrégé CPD) ou dicyclopentadiène (en abrégé DCPD), les résines d'homopolymères ou copolymères terpène, les résines d'homopolymères ou copolymères terpène phénol, les résines d'homopolymères ou copolymères de coupe C5, les résines d'homopolymères ou copolymères de coupe C9, les résines d'homopolymères et copolymères d'alpha-méthyl-styrène et les mélanges de ces résines. Le terme "terpène" regroupe ici de manière connue les monomères alpha-pinène, beta-pinène et limonène ; préférentiellement est utilisé un monomère limonène, composé se présentant de manière connue sous la forme de trois isomères possibles : le L-limonène (énantiomère lévogyre), le D-limonène (énantiomère dextrogyre), ou bien le dipentène, racémique des énantiomères dextrogyre et lévogyre. Parmi les résines plastifiantes hydrocarbonées ci-dessus, on citera notamment les résines d'homo- ou copolymères d'alphapinène, betapinène, dipentène ou polylimonène.

Les résines préférentielles ci-dessus sont bien connues de l'homme du métier et disponibles commercialement, par exemple vendues en ce qui concerne les :
- résines polylimonène : par la société DRT sous la dénomination "Dercolyte L120" (Mn=625 g/mol ; Mw=1010 g/mol ; Ip=1,6 ; Tg=72°C) ou par la société ARIZONA sous la dénomination "Sylvagum TR7125C" (Mn=630 g/mol ; Mw=950 g/mol ; Ip=1,5 ; Tg=70°C) ;
- résines de copolymère coupe C5/vinylaromatique, notamment coupe C5/ styrène ou coupe C5/ coupe C9 : par Neville Chemical Company sous les dénominations "Super Nevtac 78", "Super Nevtac 85" ou "Super Nevtac 99", par Goodyear Chemicals sous dénomination "Wingtack Extra", par Kolon sous dénominations "Hikorez T1095" et "Hikorez T1100", par Exxon sous dénominations "Escorez 2101" et "Escorez 1273" ;
- résines de copolymère limonène/ styrène : par DRT sous dénomination "Dercolyte TS 105" de la société DRT, par ARIZONA Chemical Company sous dénominations "ZT115LT" et "ZT5100".

A titre d'exemples d'autres résines préférentielles, on peut citer également les résines alpha-méthyl-styrène modifiées phénol. Pour caractériser ces résines modifiées phénol, on rappelle qu'il est utilisé de manière connue un indice dit "indice hydroxyle" (mesuré selon norme ISO 4326 et exprimé en mg KOH/g). Les résines alpha-méthyl-styrène, notamment celles modifiées phénol, sont bien connues de l'homme du métier et disponibles commercialement, par exemple vendues par la société Arizona Chemical sous les dénominations "Sylvares SA 100" (Mn = 660 g/mol ; Ip = 1,5 ; Tg = 53°C) ; "Sylvares SA 120" (Mn = 1030 g/mol ; Ip = 1,9 ; Tg = 64°C) ; "Sylvares 540" (Mn = 620 g/mol ; Ip = 1,3 ; Tg = 36°C ; indice d'hydroxyle = 56 mg KOH/g) ; "Silvares 600" (Mn = 850 g/mol ; Ip = 1,4 ; Tg = 50°C ; indice d'hydroxyle = 31 mg KOH/g).

Selon l'invention, le taux de résine hydrocarbonée est compris dans un domaine allant de 25 à 50 pce, préférentiellement de 25 à 45 pce, plus préférentiellement de 27 à 40 pce, encore plus préférentiellement de 30 à 35 pce.

### I-5 Rapport des taux de charge et de plastifiant

Selon l'invention, les taux de charge renforçante et de plastifiant sont tels que le rapport du taux total de charge et du taux total de plastifiant est compris dans un domaine allant de 0,8 à 2,2. En dessous de 0,8 la composition pourrait présenter une moindre dureté entrainant une moindre performance de comportement véhicule tandis qu'au-dessus de 2,2 la composition pourrait présenter un fort mooney entrainant une moindre processabilité industrielle.

De préférence, le rapport du taux total de charge et du taux total de plastifiant est compris dans un domaine allant de 1 à 2,2 et de préférence de 1,4 à 2.

### I-6 Autres additifs possibles

Les compositions de caoutchouc conformes à l'invention comportent optionnellement également tout ou partie des additifs usuels habituellement utilisés dans les compositions d'élastomères destinées notamment à la fabrication de bandes de roulement, comme par exemple des pigments, des agents de protection tels que cires anti-ozone, anti-ozonants chimiques, anti-oxydants, des agents plastifiants autres que ceux précédemment décrits, des agents anti-fatigue, des résines renforçantes, des accepteurs (par exemple résine phénolique Novolac) ou des donneurs de méthylène (par exemple HMT ou H3M).

Bien entendu, les compositions conformes à l'invention peuvent être utilisées seules ou en coupage (i.e., en mélange) avec toute autre composition de caoutchouc utilisable pour la fabrication de pneumatiques.

Il va de soi que l'invention concerne les compositions de caoutchouc précédemment décrites tant à l'état dit "cru" ou non réticulé (i.e., avant cuisson) qu'à l'état dit "cuit" ou réticulé, ou encore vulcanisé (i.e., après réticulation ou vulcanisation).

### II- Préparation des compositions de caoutchouc

Les compositions sont fabriquées dans des mélangeurs appropriés, en utilisant deux phases de préparation successives bien connues de l'homme du métier: une première phase de travail ou malaxage thermo-mécanique (parfois qualifiée de phase "non-productive") à haute température, jusqu'à une température maximale comprise entre 110°C et 190°C, de préférence entre 130°C et 180°C, suivie d'une deuxième phase de travail mécanique (parfois qualifiée de phase "productive") à plus basse température, typiquement inférieure à 110°C, par exemple entre 60°C et 100°C, phase de finition au cours de laquelle est incorporé le système de réticulation ou vulcanisation; de telles phases ont été décrites par exemple dans les demandes EP-A-0501227, EP-A-0735088, EP-A-0810258, WO00/05300 ou WO00/05301.

La première phase (non-productive) est conduite préférentiellement en plusieurs étapes thermomécaniques. Au cours d'une première étape on introduit, dans un mélangeur approprié tel qu'un mélangeur interne usuel, les élastomères, les charges renforçantes, la combinaison de plastifiants (et éventuellement les agents de couplage et/ou d'autres ingrédients à l'exception du système de vulcanisation), à une température comprise entre 20°C et 100°C et, de préférence, entre 25°C et 100°C. Après quelques minutes, préférentiellement de 0,5 à 2 min et une montée de la température à 90°C à 100°C, les autres ingrédients (c'est-à-dire, ceux qui restent si tous n'ont pas été mis au départ) sont ajoutés en une fois ou par parties, à l'exception du système de vulcanisation durant un mélangeage allant de 20 secondes à quelques minutes. La durée totale du malaxage, dans cette phase non-productive, est de préférence comprise entre 2 et 10 minutes à une température inférieure ou égale à 180°C, et préférentiellement inférieure ou égale à 170°C.

Après refroidissement du mélange ainsi obtenu, on incorpore alors le système de vulcanisation à basse température (typiquement inférieure à 100°C), généralement dans un mélangeur externe tel qu'un mélangeur à cylindres; le tout est alors mélangé (phase productive) pendant quelques minutes, par exemple entre 5 et 15 min.

La composition finale ainsi obtenue est ensuite calandrée, par exemple sous la forme d'une feuille ou d'une plaque, notamment pour une caractérisation au laboratoire, ou encore extrudée, pour former par exemple un profilé de caoutchouc utilisé pour la fabrication de semi-finis afin d'obtenir des produits tels qu'une bande de roulement. Ces produits peuvent ensuite être utilisés pour la fabrication de pneumatiques, selon les techniques connues de l'homme du métier.

La vulcanisation (ou cuisson) est conduite de manière connue à une température généralement comprise entre 130°C et 200°C, sous pression, pendant un temps suffisant qui peut varier par exemple entre 5 et 90 min en fonction notamment de la température de cuisson, du système de vulcanisation adopté, de la cinétique de vulcanisation de la composition considérée ou encore de la taille du pneumatique.

### III- Utilisation de la composition de l'invention

La composition selon l'invention est préférentiellement utilisée dans tout ou partie de la bande de roulement d'un pneumatique. De manière connue, la bande de roulement d'un pneumatique est la partie du pneumatique, radialement la plus extérieure, dont la surface est destinée en être en contact avec la surface de roulement (i.e., la route). De manière connue également, la bande de roulement peut elle-même être constituée de plusieurs couches, qui peuvent avoir des compositions différentes, la couche la plus extérieure étant directement en contact avec la route tandis qu'une couche plus intérieure peut ne pas être en contact avec la route lorsque le pneumatique est neuf, et être en contact avec la route soit lors de l'usage du pneumatique ou lors de son usure. Ce type de couche, de partie intérieure de bande de roulement, est parfois appelée base de bande de roulement (« base tread » par différence avec « cap tread » en anglais).

Ainsi, l'invention concerne également un pneumatique dont la bande de roulement comprend une composition telle que définie précédemment, plus préférentiellement dans une partie radialement interne de ladite bande de roulement, par rapport à la partie la plus externe.

Préférentiellement, le pneumatique selon l'invention sera choisi parmi les pneumatiques destinés à équiper un véhicule à deux roues, un véhicule de tourisme, ou encore un véhicule dit « poids lourd » (c'est-à-dire métro, bus, véhicules hors-la-route, engins de transport routier tels que camions, tracteurs, remorques), ou encore des avions, des engins de génie civil, agraire, ou de manutention.

### IV- Exemples de réalisation de l'invention

Les exemples qui suivent illustrent l'invention sans toutefois la limiter.

Dans les exemples qui suivent les compositions caoutchouteuses ont été réalisées comme décrit précédemment.

### IV-1 Caractérisation des exemples

Dans les exemples, les compositions de caoutchouc sont caractérisées avant et/ou après cuisson comme indiqué ci-après.

### - Collant à cru (ou tack):

Le tack est la capacité d'un assemblage de mélanges non vulcanisés à résister à une sollicitation d'arrachement.

On utilise pour la mesure du collant à cru (tack) un dispositif de test est inspiré du probe tack tester (ASTM D2979-95). On utilise une machine de traction Instron comportant un mors métallique fixe et un mors métallique mobile. Une première éprouvette constituée d'un film de mélange de 3mm d'épaisseur est collée sur le mors fixe. Une deuxième éprouvette constituée d'un film de mélange de 3mm d'épaisseur est collée sur le mors mobile. Les films de mélange sont collés sur la surface des mors métalliques avec un adhésif double face (Tesafix® 4970).

Pour la préparation des éprouvettes de mélange, les films de mélange sont obtenus par calandrage à une épaisseur de 3 mm. Les éprouvettes sont découpées à l'aide d'un emporte-pièce de diamètre 1 cm.

Le principe de la mesure consiste à mettre en contact les deux films de mélange durant 5 secondes en appliquant une force de compression de 40 N. Après cette phase de contact, ils sont séparés par entraînement de la traverse de la machine de traction. La vitesse de déplacement de la traverse dans cette phase d'arrachement est de 1mm/s. Le déplacement de la traverse et la force sont mesurés en continu en fonction du temps durant les phases de contact et d'arrachement.

Le résultat de collant à cru est la mesure de la force maximum (en Newton, N) atteinte lors de l'arrachement. Une valeur de 9 N et plus est souhaitable pour la présente invention.

### - Propriétés dynamiques (après cuisson):

Les propriétés dynamiques G* et tan(δ)max sont mesurées sur un viscoanalyseur (Metravib V A4000), selon la norme ASTM D 5992 - 96. On enregistre la réponse d'un échantillon de composition vulcanisée (éprouvette cylindrique de 4 mm d'épaisseur et de 400 mm2 de section), soumis à une sollicitation sinusoïdale en cisaillement simple alterné, à la fréquence de 10Hz, dans les conditions variables de température, notamment à 23°C, selon la norme ASTM D 1349 - 99. On effectue un balayage en amplitude de déformation crête à crête de 0,1 à 50% (cycle aller), puis de 50% à 1 % (cycle retour). Les résultats exploités sont le module complexe de cisaillement dynamique (G*) et le facteur de perte (tan δ). Pour le cycle retour, on indique la valeur maximale de tan δ observée (tan(δ)max), ainsi que l'écart de module complexe (ΔG*) entre les valeurs à 0,1% et à 50% de déformation (effet Payne).

Pour les valeurs de tan(δ) max à 23°C, plus la valeur est basse, plus la composition a une hystérèse faible et donc une résistance au roulement faible, indiquant une performance en résistance au roulement améliorée. Les résultats sont exprimés en base 100, sur la performance en résistance au roulement, c'est-à-dire qu'on affecte arbitrairement la valeur 100 à une composition, pour comparer ensuite le tan(δ)max à 23°C (c'est-à-dire l'hystérèse - et donc la résistance au roulement) des différentes solutions testées. Plus la valeur de performance en base 100 est élevée, plus la performance de résistance au roulement est bonne, c'est-à-dire que la résistance au roulement, et donc dans ce test l'hystérèse, est faible.

### - Essais de traction

Ces essais de traction permettent de déterminer les contraintes d'élasticité et les propriétés à la rupture. Sauf indication différente, ils sont effectués conformément à la norme française NF T 46-002 de septembre 1988. On mesure en seconde élongation (i.e., après un cycle d'accommodation au taux d'extension prévu pour la mesure elle-même) le module sécant nominal (ou contrainte apparente, en MPa) à 10% d'allongement (noté MA10), à 100% d'allongement (noté MA 100) et à 300% d'allongement (noté MA300).

On s'intéresse en particulier à la valeur du MA300, qui donne une indication du renforcement. Les résultats sont exprimés en base 100, c'est-à-dire qu'on affecte arbitrairement la valeur 100 à une composition, pour comparer ensuite le MA300 des différentes solutions testées, plus la valeur est élevée, plus le renforcement est important.

### IV-2 Exemples

Les compositions sont fabriquées avec une introduction de l'ensemble des constituants sur un mélangeur interne, à l'exception du système de vulcanisation. Les agents de vulcanisation (soufre et accélérateur) sont introduits sur un mélangeur externe à basse température (les cylindres constitutifs du mélangeur étant à environ 30°C).

Les exemples présentés dans le tableau 1 ont pour objet de comparer les différentes propriétés de compositions conformes à l'invention (C1 à C3) à des compositions témoins (T1 à T6). Les propriétés mesurées avant et après cuisson sont présentées au tableau 2.

**Tableau 1**

| Composition | C1 | C2 | C3 | T1 | T2 | T3 | T4 | T5 | T6 |
|---|---|---|---|---|---|---|---|---|---|
| NR (1) | 25 | 25 | 10 | 0 | 20 | 10 | 25 | 25 | 25 |
| BR (2) | 30 | 30 | 30 | 25 | 45 | 30 | 30 | 30 | 30 |
| SBR 1 (3) | 45 | 45 | 60 | 75 | 35 | 0 | 0 | 45 | 45 |
| SBR 2 (4) | 0 | 0 | 0 | 0 | 0 | 60 | 45 | 0 | 0 |
| Noir (5) | 4 | 4 | 4 | 4 | 4 | 4 | 4 | 4 | 4 |
| Silice (6) | 120 | 120 | 120 | 120 | 120 | 120 | 120 | 120 | 80 |
| Silane (7) | 9.6 | 9.6 | 9.6 | 9.6 | 9.6 | 9.6 | 9.6 | 9.6 | 6.4 |
| Huile 1 (8) | 30 | 0 | 30 | 27 | 30 | 0 | 30 | 0 | 30 |
| Huile 2 (9) | 0 | 30 | 0 | 0 | 0 | 40 | 0 | 0 | 0 |
| Résine (10) | 34 | 34 | 34 | 55 | 34 | 35 | 34 | 30 | 34 |
| Total plastifiants | 64 | 64 | 64 | 82 | 64 | 75 | 64 | 30 | 64 |
| Ratio charge / Plast. | 1.9 | 1.9 | 1.9 | 1.5 | 1.9 | 1.7 | 1.9 | 4.1 | 1.3 |
| Protection (11) | 5.0 | 5.0 | 5.0 | 5.0 | 5.0 | 5.0 | 5.0 | 5.0 | 5.0 |
| Acide stéarique (12) | 3.0 | 3.0 | 3.0 | 3.0 | 3.0 | 3.0 | 3.0 | 3.0 | 3.0 |
| DPG (13) | 2.1 | 2.1 | 2.1 | 2.1 | 2.1 | 2.1 | 2.1 | 2.1 | 2.1 |
| ZnO (14) | 1.5 | 1.5 | 1.5 | 1.5 | 1.5 | 1.5 | 1.5 | 1.5 | 1.5 |
| Accélérateur (15) | 1.6 | 1.6 | 1.6 | 1.6 | 1.6 | 1.6 | 1.6 | 1.6 | 1.6 |
| Soufre | 1.4 | 1.4 | 1.4 | 1.4 | 1.4 | 1.4 | 1.4 | 1.4 | 1.4 |

| | | | | | | | | | |
|---|---|---|---|---|---|---|---|---|---|
| (1) NR : caoutchouc naturel (2) BR : polybutadiène (3) SBR 1 : SBR avec 15.5% en poids de motif styrène et 24% de motif 1,2 de la partie butadiénique (Tg = -65°C) (4) SBR 2 : SBR avec 40% en poids de motif styrène et 16% de motif 1,2 de la partie butadiénique (Tg = -12°C) (5) Noir de carbone Grade ASTM N234(société Cabot) (6) Silice « Zeosil 1165 MP » de la société Rhodia type « HDS » (7) Agent de couplage : Silane TESPT (« Si69 » de la société Evonik - Degussa) (8) Trioleate de glycerol, huile de tournesol à 85% en poids d'acide oléique « Lubrirob Tod 1880 » de la société Novance (9) Huile TDAE « Vivatec 500 » de la société Klaus Dahleke (10) Résine C5/C9 «Escorez 2173» de société EXXON (Mn 810 g/mol) (11) N-(1,3-diméthylbutyl)-N'-phényl-p-phénylènediamine (Santoflex 6-PPD) de la société Flexsys et Cire anti-ozone (12) Stéarine « Pristerene 4931 » de la société Uniqema (13) Diphénylguanidine « Perkacit DPG » de la société Flexsys (14) Oxyde de zinc de grade industriel - société Umicore (15) N-cyclohexyl-2-benzothiazol-sulfénamide (« Santocure CBS » de la société Flexsys) | | | | | | | | | |

**Tableau 2**

| Composition | C1 | C2 | C3 | T1 | T2 | T3 | T4 | T5 | T6 |
|---|---|---|---|---|---|---|---|---|---|
| MA300 performance base 100 | 100.0 | 125.7 | 102.0 | 73.7 | 91.5 | 94.5 | 87.1 | 194.5 | 68.4 |
| Tg(δ) Max 23°C performance base 100 | 100.0 | 88.2 | 99.9 | 98.8 | 93.2 | 70.6 | 80.4 | 100.0 | 165.1 |
| Moyenne des performances base 100 | 100.0 | 107.0 | 101.0 | 86.2 | 92.3 | 82.5 | 83.7 | 147.2 | 116.8 |
| CAC | 9.2 | 9.0 | 9.2 | 9.1 | 9.0 | 11.0 | 8.9 | 6.4 | 8.4 |

Les résultats montrent que les compositions de l'invention permettent un très bon collant à cru, d'une valeur supérieure à 9, important pour la mise en oeuvre des compositions, tout en permettant de conserver et même d'améliorer l'équilibre des performances de renforcement et de résistance au roulement.

## Revendications

1. Pneumatique comprenant une composition de caoutchouc à base d'au moins :
- 10 à 25 pce de polyisoprène,
- 30 à 40 pce de polybutadiène,
- 45 à 60 pce de copolymère styrène butadiène dont le taux de styrène est inférieur à 30% en poids,
- 90 à 150 pce de charge renforçante inorganique,
- 1 à 10 pce de noir de carbone,
- 50 à 100 pce d'un système plastifiant comprenant de 25 à 50 pce d'huile plastifiante et 25 à 50 pce de résine hydrocarbonée,
dans laquelle les quantités de charge et de plastifiant sont telles que le rapport de la quantité de charge en pce sur la quantité de plastifiant en pce est comprise entre 0,8 et 2,2.

2. Pneumatique selon la revendication 1, dans lequel ledit polyisoprène comprend majoritairement du caoutchouc naturel.

3. Pneumatique selon l'une quelconque des revendications précédentes dans lequel ledit copolymère styrène butadiène présente un taux de styrène inférieur à 20% en poids.

4. Pneumatique selon l'une quelconque des revendications précédentes dans lequel ledit copolymère styrène butadiène présente un taux de styrène compris dans un domaine allant de 1% à 20%, de préférence de 2 à 17% en poids.

5. Pneumatique selon l'une quelconque des revendications précédentes dans lequel la charge renforçante inorganique est de la silice.

6. Pneumatique selon la revendication précédente dans lequel la silice présente une surface spécifique BET comprise entre 130 et 400 m²/g, préférentiellement comprise entre 140 et 300 m²/g.

7. Pneumatique selon l'une quelconque des revendications précédentes dans lequel le taux de charge renforçante inorganique est compris dans un domaine allant de 100 à 140 pce, de préférence de 110 à 140 pce.

8. Pneumatique selon l'une quelconque des revendications précédentes dans lequel le taux total de plastifiant est compris dans un domaine allant de 50 à 90 pce, plus préférentiellement de 55 à 80 pce.

9. Pneumatique selon l'une quelconque des revendications précédentes dans lequel l'huile plastifiante est choisie dans le groupe constitué par les huiles naphténiques, les huiles paraffiniques, les huiles MES, les huiles TDAE, les huiles minérales, les huiles végétales, les plastifiants éthers, les plastifiants esters, les plastifiants phosphates, les plastifiants sulfonates et les mélanges de ces composés.

10. Pneumatique selon l'une quelconque des revendications précédentes dans lequel l'huile plastifiante est une huile végétale dont l'indice d'iode en g/100g est compris entre 90 et 140, de préférence une huile végétale choisie dans le groupe constitué par l'huile de tournesol, l'huile de colza et de lin et leurs mélanges.

11. Pneumatique selon l'une quelconque des revendications précédentes dans lequel le taux d'huile plastifiante est compris dans un domaine allant de 25 à 45 pce, plus préférentiellement de 27 à 40 pce.

12. Pneumatique selon l'une quelconque des revendications précédentes dans lequel la résine plastifiante hydrocarbonée est choisie dans le groupe constitué par les résines d'homopolymères ou copolymères de cyclopentadiène ou dicyclopentadiène, les résines d'homopolymères ou copolymères terpène, les résines copolymères terpène phénol, les résines d'homopolymères ou copolymères de coupe C5, les résines d'homopolymères ou copolymères de coupe C9, les résines d'homopolymères et copolymères d'alpha-méthyl-styrène et les mélanges de ces résines.

13. Pneumatique selon l'une quelconque des revendications précédentes dans lequel le taux de résine hydrocarbonée est compris dans un domaine allant de 25 à 45 pce, plus préférentiellement de 27 à 40 pce.

14. Pneumatique selon l'une quelconque des revendications précédentes dans lequel le rapport du taux total de charge et du taux total de plastifiant est compris dans un domaine allant de 1 à 2,2 et de préférence de 1,4 à 2.

15. Pneumatique selon l'une quelconque des revendications précédentes dans lequel la bande de roulement comprend une composition telle que définie selon l'une des revendications 1 à 14.

## Patentansprüche

1. Reifen, umfassend eine Kautschukzusammensetzung auf Basis von mindestens:
- 10 bis 25 phe Polyisopren,
- 30 bis 40 phe Butadien,
- 45 bis 60 phe Styrol-Butadien-Copolymer mit einem Styrolgehalt von weniger als 30 Gew.-%,
- 90 bis 150 phe anorganischem verstärkendem Füllstoff,
- 1 bis 10 phe Ruß,
- 50 bis 100 phe eines Weichmachersystems, das 25 bis 50 phe Weichmacheröl und 25 bis 50 phe Kohlenwasserstoffharz umfasst,
wobei die Mengen von Füllstoff und Weichmacher so beschaffen sind, dass das Verhältnis der Menge von Füllstoff in phr zur Menge von Weichmacher in phe zwischen 0,8 und 2,2 liegt.

2. Reifen nach Anspruch 1, wobei das Polyisopren hauptsächlich Naturkautschuk umfasst.

3. Reifen nach einem der vorhergehenden Ansprüche, wobei das Styrol-Butadien-Copolymer einen Styrolgehalt von weniger als 20 Gew.-% aufweist.

4. Reifen nach einem der vorhergehenden Ansprüche, wobei das Styrol-Butadien-Copolymer einen Styrolgehalt im Bereich von 1 bis 20 Gew.-%, vorzugsweise 2 bis 17 Gew.-%, aufweist.

5. Reifen nach einem der vorhergehenden Ansprüche, wobei es sich bei dem anorganischen verstärkenden Füllstoff um Kieselsäure handelt.

6. Reifen nach dem vorhergehenden Anspruch, wobei die Kieselsäure eine spezifische BET-Oberfläche zwischen 130 und 400 m²/g, vorzugsweise zwischen 140 und 300 m²/g, aufweist.

7. Reifen nach einem der vorhergehenden Ansprüche, wobei der Gehalt an verstärkendem anorganischem Füllstoff im Bereich von 100 bis 140 phe, vorzugsweise von 110 bis 140 phe, liegt.

8. Reifen nach einem der vorhergehenden Ansprüche, wobei der Gesamtgehalt an Weichmacher im Bereich von 50 bis 90 phe, weiter bevorzugt von 55 bis 80 phe, liegt.

9. Reifen nach einem der vorhergehenden Ansprüche, wobei das Weichmacheröl aus der Gruppe bestehend aus naphthenischen Ölen, Paraffinölen, MES-Ölen, TDAE-Ölen, Mineralölen, Pflanzenölen, Ether-Weichmachern, Ester-Weichmachern, Phosphat-Weichmachern, Sulfonat-Weichmachern und Mischungen dieser Verbindungen ausgewählt ist.

10. Reifen nach einem der vorhergehenden Ansprüche, wobei es sich bei dem Weichmacheröl um ein Pflanzenöl mit einer Iodzahl in g/100 g zwischen 90 und 140, vorzugsweise um ein Pflanzenöl aus der Gruppe bestehend aus Sonnenblumenöl, Rapsöl und Leinöl und Mischungen davon, handelt.

11. Reifen nach einem der vorhergehenden Ansprüche, wobei der Gehalt an Weichmacheröl im Bereich von 25 bis 45 phe, weiter bevorzugt von 27 bis 40 phe, liegt.

12. Reifen nach einem der vorhergehenden Ansprüche, wobei das Kohlenwasserstoff-Weichmacherharz aus der Gruppe bestehend aus Cyclopentadien- oder Dicyclopentadien-Homopolymer- oder Copolymerharzen, Terpen-Homopolymer- oder Copolymerharzen, Terpen-Phenol-Homopolymer- oder Copolymerharzen, C5-Schnitt-Homopolymer- oder Copolymerharzen, C9-Schnitt-Homopolymer- oder Copolymerharzen, alpha-Methylstyrol-Homopolymer- oder Copolymerharzen und Mischungen dieser Harze ausgewählt ist.

13. Reifen nach einem der vorhergehenden Ansprüche, wobei der Gehalt an Kohlenwasserstoffharz im Bereich von 25 bis 45 phe, weiter bevorzugt von 27 bis 40 phe, liegt.

14. Reifen nach einem der vorhergehenden Ansprüche, wobei das Verhältnis der Gesamtmenge von Füllstoff zur Gesamtmenge an Weichmacher im Bereich von 1 bis 2,2 und vorzugsweise von 1,4 bis 2 liegt.

15. Reifen nach einem der vorhergehenden Ansprüche, wobei die Lauffläche eine Zusammensetzung gemäß einem der Ansprüche 1 bis 14 umfasst.

## Claims

1. Tire comprising a rubber composition based on at least:
- 10 to 25 phr of polyisoprene,
- 30 to 40 phr of polybutadiene,
- 45 to 60 phr of styrene butadiene copolymer, the styrene content of which is less than 30% by weight,
- 90 at 150 phr of inorganic reinforcing filler,
- 1 to 10 phr of carbon black,
- 50 to 100 phr of a plasticizing system comprising from 25 to 50 phr of plasticizing oil and 25 to 50 phr of hydrocarbon resin,
wherein the amounts of filler and plasticizer are such that the ratio of the amount of filler in phr to the amount of plasticizer in phr is between 0.8 and 2.2.

2. A tire according to claim 1, wherein said polyisoprene mainly comprises natural rubber.

3. Tire according to any one of the preceding claims, wherein said styrene butadiene copolymer has a styrene content of less than 20% by weight.

4. Tire according to any one of the preceding claims, wherein said styrene butadiene copolymer has a styrene content comprised in a range ranging from 1% to 20%, preferably from 2 to 17% by weight.

5. Tire according to any one of the preceding claims, wherein the inorganic reinforcing filler is silica.

6. Tire according to the preceding claim, wherein the silica has a BET specific surface of between 130 and 400 m²/g, preferably between 140 and 300 m²/g.

7. Tire according to any one of the preceding claims, wherein the rate of inorganic reinforcing filler is comprised within a range from 100 to 140 phr, preferably from 110 to 140 phr.

8. Tire according to any one of the preceding claims, wherein the rate of plasticizer is comprised within a range from 50 to 90 phr, more preferably from 55 to 80 phr.

9. Tire according to any one of the preceding claims, wherein the plasticizing oil is chosen from the group consisting of naphthenic oils, paraffinic oils, MES oils, TDAE oils, mineral oils, vegetable oils, ether plasticizers, ester plasticizers, phosphate plasticizers, sulfonate plasticizers and mixtures of these compounds.

10. Tire according to any one of the preceding claims, wherein the plasticizing oil is a vegetable oil whose iodine index in g/100 g is comprised between 90 and 140, preferably a vegetable oil chosen from the group consisting of sunflower oil, rapeseed and linseed oil and their mixtures.

11. Tire according to any one of the preceding claims, wherein the level of plasticizing oil is in a range from 25 to 45 phr, more preferably from 27 to 40 phr.

12. Tire according to any one of the preceding claims, wherein the plasticizing hydrocarbon resin is chosen from the group consisting of homopolymer or copolymer resins of cyclopentadiene or dicyclopentadiene, homopolymer resins or terpene copolymers, terpene phenol copolymer resins, C5 cut homopolymer or copolymer resins, C9 cut homopolymer or copolymer resins, alpha-methyl-styrene homopolymer and copolymer resins and mixtures of these resins.

13. Tire according to any one of the preceding claims, wherein the rate of hydrocarbon resin is comprised within a range from 25 to 45 phr, more preferably from 27 to 40 phr.

14. Tire according to any one of the preceding claims, wherein the ratio of the total charge rate and the total plasticizer rate is comprised within a range from 1 to 2.2 and preferably from 1.4 to 2.

15. Tire according to any one of the preceding claims, wherein the tread comprises a composition as defined according to one of Claims 1 to 14.
